# EUROPÄISCHE PATENTANMELDUNG

(11) **EP 2 083 513 A1**
(43) Veröffentlichungstag der Anmeldung: **29.07.2009**
(21) Anmeldenummer: 08001528.2
(22) Anmeldetag: 28.01.2008
(51) Int. Cl.: H02P 1/58

(54) **Regelungsverfahren für Drehstrommotoren**

(71) Anmelder: Bavaria Electric GmbH & Co. KG, 82205 Gilching (DE)
(72) Erfinder: Kucharik, Roman, 82216 Gernlinden (DE); Jakob, Karl, 85598 Baldham (DE)
(74) Vertreter: Strobel, Wolfgang

(57) **Zusammenfassung**

Ein Verfahren zum Regeln der Betriebsleistung einer Mehrzahl von Drehstromasynchronmotoren, die in einem Drehstromnetz parallel geschalten betrieben werden, weist die folgenden Schritte auf:
a) Anfahren eines ersten Drehstrommotors mittels eines vorbestimmten Steuerverfahrens, bis die Nenndrehzahl erreicht ist,
b) Abkoppeln des ersten Drehstrommotors von dem vorbestimmten Steuerverfahren und Aufschalten des ersten Drehstrommotors an das Drehstromnetz, so dass der erste Drehstrommotor mit Nennleistung am Drehstromnetz läuft, und
c) nach einer vorbestimmten Zeitdauer Anfahren eines zweiten Drehstrommotors mittels des vorbestimmten Steuerverfahrens auf einen definierten Arbeitspunkt oder bis zur Nenndrehzahl.
Das Verfahren ist dadurch gekennzeichnet, dass für das vorbestimmte Steuerverfahren ein einziges Steuergerät verwendet wird, derart, dass für das Anfahren jeweils dasselbe Steuergerät nacheinander für sämtliche Drehstrommotoren zum Einsatz kommt.

## Beschreibung

Die Erfindung betrifft ein Regelungsverfahren für Drehstromasynchronmotoren, die in großen Kühl- oder Klimaanlagen für Ventilatoren einzeln oder in Gruppen an Drehstromnetzen betrieben werden.

Bei Großkühlanlagen oder Großklimaanlagen werden für die Rückkühlung des Kühlmittels Verflüssiger verwendet, die mit Ventilatoren bestückt sind, die von Drehstrommotoren angetrieben sind. Um möglichst geräuscharm und materialschonend betrieben zu werden, laufen die Drehstrommotoren idealerweise bei Nennleistung mit sinusförmiger Betriebsspannung mit der Netzfrequenz des Drehstromnetzes. Im Stand der Technik werden diese Drehstrommotoren entweder einzeln, gruppenweise oder gemeinsam zu- oder abgeschaltet, wobei die Motoren ohne weitere Regelung voll auf das Drehstromnetz aufgeschaltet werden. Alternativ können die Motoren wiederum einzeln, gruppenweise oder gemeinsam über an sich bekannte Steuerverfahren stufenlos oder in Stufen auf die Nenndrehzahl hochgefahren werden.

Nachteilig am einzelnen Zu- und Abschalten der Drehstrommotoren sind hohe Anlaufspitzenströme, eine starke Erwärmung und damit Energieverluste und die dadurch verkürzte Lebensdauer. Beim gruppenweisen Zu- und Abschalten ergeben sich zusätzliche Nachteile durch die starke Geräuschbelastung, ebenso beim gemeinsamen Zu- und Abschalten sämtlicher Drehstrommotoren einer Anlage, wobei zusätzlich noch stark erhöhte Stromwerte auftreten. Bei Verwendung eines Steuerverfahrens, wie z. B. Phasenanschnittsteuerung oder die Verwendung von Frequenzumformen, werden zwar die Anlaufströme in Grenzen gehalten, durch die Einflüsse der Elektronik im Leistungsteil werden die Motoren jedoch im unteren Drehzahlbereich sehr heiß, und gerade in diesem Bereich ist die Motorkühlung sehr gering. Durch die teilweise pulsierende Energie werden zusätzliche Rüttelkräfte frei, die die Motoren sehr belasten und erheblichen Lärm erzeugen. Darüber hinaus werden im Betrieb die Bauteile der Leistungselektronik stark erwärmt, was wiederum die Verluste erhöht.

Wird als stufenweises Steuerverfahren beispielsweise das Verfahren nach EP 1 580 878 A1 verwendet, so können die Wärmeentwicklung und die Rütteleffekte reduziert werden. Werden beispielsweise zehn Ventilatoren mit einem Flügeldurchmesser von 1 m an 3 x 400 V parallel betrieben, so hat jeder Motor einen Strombedarf von ca. 8 A bei 900 U/min. Dadurch ergibt sich für ein Steuergerät eine Gesamtleistung von ca. 80 A, rechnet man eine Reserve von ca. 10 % hinzu, so ergibt sich ein Strombedarf von ca. 90 A. Dies bedingt einen enormen Kostenaufwand.

Es ist deshalb die Aufgabe der folgenden Erfindung, ein Regelungsverfahren für Drehstrommotoren bereitzustellen, das die Nachteile des Standes der Technik überwindet, kostengünstig und einfach eingesetzt sowie ohne erheblichen Aufwand nachgerüstet werden kann.

Diese Aufgabe wird durch die Merkmale des Anspruchs 1 gelöst. Vorteilhafte Ausgestaltungen sind Gegenstand der abhängigen Ansprüche.

Das erfindungsgemäße Verfahren zum Regeln der Betriebsleistung einer Mehrzahl von Drehstromasynchronmotoren, die in einem Drehstromnetz parallel geschalten betrieben werden, weist die folgenden Schritte auf:
a) Anfahren eines ersten Drehstrommotores mittels eines vorbestimmten Steuerverfahrens, bis die Nenndrehzahl erreicht ist,
b) Abkoppeln des ersten Drehstrommotores von dem vorbestimmten Steuerverfahren und Aufschalten des ersten Drehstrommotores an das Drehstromnetz, so dass der erste Drehstrommotor mit Nennleistung am Drehstromnetz läuft,
c) nach einer vorbestimmten Zeitdauer Anfahren eines zweiten Drehstrommotores mittels des vorbestimmten Steuerverfahrens auf einen definierten Arbeitspunkt oder bis zur Nenndrehzahl.

Das erfindungsgemäße Verfahren ist dadurch gekennzeichnet, dass für das vorbestimmte Steuerverfahren ein einziges Steuergerät verwendet wird, derart, dass für das Anfahren jeweils dasselbe Steuergerät nacheinander für sämtliche Drehstrommotoren zum Einsatz kommt.

Der besondere Vorteil dieses Verfahrens liegt darin, dass für sämtliche Drehstrommotoren nur ein einziges Steuerverfahren bzw. Steuergerät benötigt wird. Dies bedeutet wiederum, dass der Strombedarf einschließlich Reserve beispielsweise für einen Frequenzumformer auf den Strombedarf genau eines Steuergerätes begrenzt ist. Dies stellt eine erhebliche Kostenersparnis gegenüber dem Stand der Technik dar, denn dort sind Steuergeräte entsprechend der Anzahl an Drehstrommotoren notwendig, und dadurch wird der Strombedarf vervielfacht. Hinsichtlich der Geräuschentwicklung wird ebenfalls eine erhebliche Verbesserung erzielt, denn es erfolgt keine ruckartige Hinzuschaltung von Drehstrommotoren, sondern eine gleichmäßige Annäherung an die Nennleistung durch kontinuierliches Hochfahren. Dies hat beispielsweise für den Einsatz von Kühlanlagen in Supermärkten, die sich in Wohngebieten befinden, eine enorme Wichtigkeit.

Vorteilhafterweise weist das erfindungsgemäße Verfahren zusätzlich die Schritte
d) Abkoppeln des zweiten Drehstrommotores von dem vorbestimmten Steuerverfahren, sobald die Nenndrehzahl erreicht ist, und Aufschalten des zweiten Drehstrommotores an das Drehstromnetz, so dass der zweite Drehstrommotor mit Nenndrehzahl am Drehstromnetz läuft, und
e) Wiederholen der Schritte c) und d) für weitere Drehstrommotoren
auf, bis die gewünschte Betriebsleistung erreicht ist.

Damit kann eine beliebige Kaskade von Drehstrommotoren kostengünstig hochgefahren werden. Ein weiterer erheblicher Vorteil ist zudem, dass man durch die Vermeidung der hohen Anlaufstromspitzen die Transformator-Reserveleistung zurücknehmen kann.

Mit weiterem Vorteil ist Schritt d) des erfindungsgemäßen Verfahrens für den letzten hochgefahrenen Drehstrom optional. Dies bietet den Vorteil, dass je nach verwendetem Steuerverfahren nicht bis zur vollen Nennleistung bzw. Drehzahl des Drehstrommotores hochgefahren werden muss, sondern die Leistung auf einer vordefinierten (Drehzahl-) Stufe als Arbeitspunkt belassen werden kann. So lassen sich beliebige Abstufungen in der Gesamtbetriebsleistung der Kaskade von Drehstrommotoren kostengünstig erzielen.

Mit weiterem Vorteil umfasst das erfindungsgemäße Verfahren zusätzlich den Schritt des Abschaltens eines oder mehrerer mit Nennleistung laufender Drehstrommotoren. Auf diese Weise bietet sich die Möglichkeit, die Leistung einer Kaskade von Drehstrommotoren nicht nur hochzufahren, sondern den Bedarfsgegebenheiten anzupassen. Geht beispielsweise die Außentemperatur bei einer Kühlanlage eines Supermarktes erheblich zurück, so dass weniger Kühlleistung erforderlich ist, kann mit dem erfindungsgemäßen Verfahren die notwendige Leistung der Ventilatoren entsprechend der Umgebungstemperatur geregelt werden. Dazu werden ein oder mehrere Drehstrommotoren vollständig abgeschaltet und der dem letzten mit voller Nennleistung laufenden Motor am nächsten stehende Motor mit Hilfe des Steuerverfahrens auf den gewünschten Arbeitspunkt, d. h. auf die gewünschte Drehzahl(stufe) hochgefahren.

Vorteilhafterweise verwendet das erfindungsgemäße Verfahren als vorbestimmtes Steuerverfahren eine Drehzahlregelung mittels Phasenanschnittsteuerung, Frequenzumformung, Stufensteuerung oder dergleichen. Ein besonders geeignetes Steuerverfahren ist die so genannte SSEC-Steuerung, die bei der Anmelderin erhältlich und in der EP 1 580 878 A1 beschrieben ist.

Mit besonderem Vorteil wird bei dem erfindungsgemäßen Verfahren bei jeder Durchführung des Verfahrens ein anderer Drehstrommotor aus der Mehrzahl von Drehstrommotoren als erster Drehstrommotor verwendet. Dadurch ergibt sich ein rollierendes System, das bei jedem Anfahren der Gesamtheit aller Drehstrommotoren jeweils einen anderen Motor als ersten und damit am längsten laufenden Drehstrommotor verwendet. Dadurch wird erreicht, dass Unterschiede bei den Laufzeiten der Motoren einer Kaskade möglichst stark reduziert werden, was den Wartungsaufwand vermindert und dadurch die Laufleistung erhöht. Insbesondere bei Anlagen, wo nicht eine kontinuierliche, gleichmäßige Leistung, sondern periodisch Spitzenwerte bei der Leistung abgerufen werden, die sich mit Ruhezeiten abwechseln, können mit dem erfindungsgemäßen Verfahren erhebliche Einsparungen und Belastungsreduktionen erzielt werden.

Das erfindungsgemäße Verfahren kann bei Drehstrommotoren in Fällen eingesetzt werden, bei denen die Last mit der Drehzahl quadratisch zunimmt. Darüber hinaus ist das erfindungsgemäße Verfahren auch mit Hilfe von Frequenzumsetzern bei Drehstrommotoren mit konstanten Drehmomenten einsetzbar, die bei Kompressoren bzw. Verdichtern eingesetzt werden. Je nach erforderlicher Kälteleistung werden eine oder mehrere dieser Verdichter eingesetzt. Bei diesem Anwendungsfall ist die Spreizung des unterschiedlichen Leistungsbedarfs noch größer und deshalb kann eine noch stärkere Kostenersparnis durch Verwendung des erfindungsgemäßen Verfahrens erzielt werden.

Nachfolgend soll ein praktisches Ausführungsbeispiel der Erfindung anhand der Zeichnung näher erläutert werden.

Die Zeichnung zeigt schematisch ein Schaltbild, das das erfindungsgemäße Regelungsverfahren in einem Steuergerät für fünf Drehstromasynchron-Kurzschlussläufermotoren veranschaulicht.

Es wird angenommen, dass fünf Drehstromasynchron-Kurzschlussläufermotoren M₁ bis M₅ z. B. in einer Kühlanlage eingesetzt werden. Jeder Drehstrommotor treibt jeweils einen Ventilator mit einem Flügeldurchmesser von 1 m an. Das Drehstromnetz ist ein übliches 3 x 400 V-Netz. Der Strombedarf jedes Motores beträgt etwa 8 A bei der Nenndrehzahl von 900 U/min. Derartige Kühlanlagen werden beispielsweise in Supermärkten im Dauerbetrieb eingesetzt.

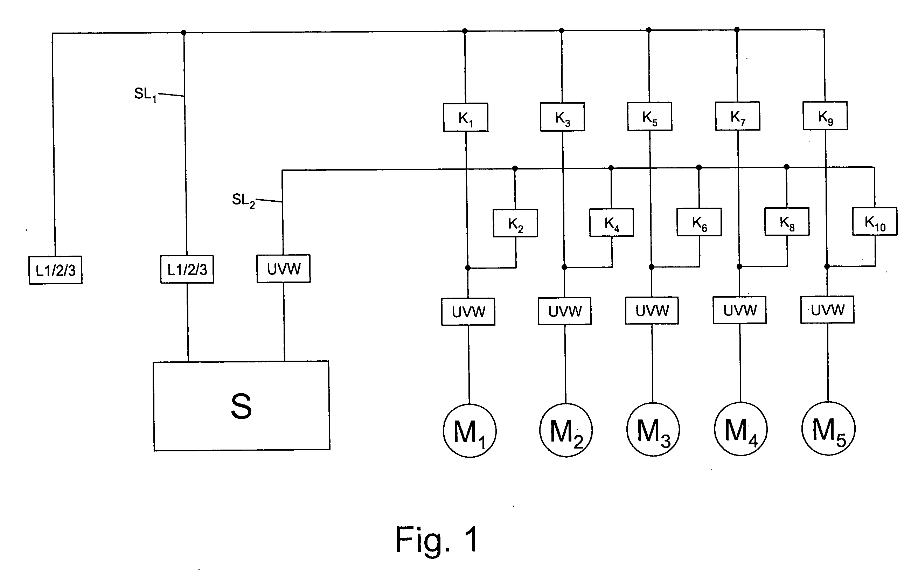

Als Steuerverfahren zum Anfahren der Drehstrommotoren kommt in dem Ausführungsbeispiel eine Motordrehzahlregelung vom Typ SSEC (Six-Step-Energy-Control) mit sechs Drehzahlstufen zwischen 0 und Nenndrehzahl zum Einsatz. Das Steuergerät S weist eine Steuerleitung SL₁ auf, die über die Schütze K₁, K₃, K₅, K₇ bzw. K₉ jeweils mit den Drehstrommotoren M₁, M₂, M₃, M₄ bzw. M₅ und mit dem Drehstromnetz verbunden ist. Weiterhin weist das Steuergerät S eine Steuerleitung SL₂ auf, die über die Schütze K₂, K₄, K₆, K₈ bzw. K₁₀ jeweils mit den Drehstrommotoren M₁, M₂, M₃, M₄ bzw. M₅ verbunden ist. Das Zu- und Abschalten der Drehstrommotoren erfolgt durch das Steuergerät S mittels der Schütze K₁ bis K₁₀ Die Steuerleitungen für die Schütze sind der Einfachheit halber nicht in der Fig. 1 dargestellt.

Die Regelung der Anlage erfolgt beispielsweise über einen (nicht dargestellten) die Außentemperatur messenden Temperaturfühler oder mittels Drucksensoren, die den Verflüssigurigsdruck des Kühlmittels messen, wobei am Steuergerät pro Parameter zwei Sollwerte eingestellt und gespeichert werden können. Die Sollwerte können auch über ein 0 - 10 V oder 0 - 20 mA - Signal von einer übergeordneten Steuerung vorgegeben werden. Die Auswertung und Zuschaltung der Drehstrommotoren wird über eine P-Band-Regelung umgesetzt, d. h. die Lüfterleistung wird proportional zum Temperatur- oder Druckanstieg eingestellt.

Wird das Steuergerät so eingestellt, dass die Außentemperatur in einem bestimmten Temperaturkorridor liegen soll, was z. B. bei 27° C einer Ventilatorleistung von genau drei auf Nennleistung laufenden Ventilatoren entspricht, dann verläuft der Vorgang des Hochfahrens der Drehstrommotoren wie folgt. Zunächst wird der erste Drehstrommotor M₁ durch Aufschalten des Schützes K₂ stufenweise auf die volle Nennleistung hochgefahren. Dieser Vorgang verläuft ohne störende Geräuschentwicklung durch Stromspitzen und dauert beispielsweise 5 s. Nach Erreichen der Nenndrehzahl trennt das Steuergerät S das Schütz K₂ und schaltet das Schütz K₁ auf, wonach der Motor M₁ 100 % mit der Netzfrequenz mit rein sinusförmiger Spannung läuft. Nach einer vorbestimmten Zeit, die z. B. 1 s beträgt, nachdem der Motor M₁ auf das Netz geschaltet wurde, wird der zweite Drehstrommotor M₂ über die SSEC-Steuerung stufenweise ebenfalls auf die volle Nenndrehzahl hochgefahren, indem das Schütz K₄ geschaltet wird. Ist die Nenndrehzahl erreicht, wird nun auch der Motor M₂ von der SSEC-Steuerung durch Trennen des Schützes K₄ und Zuschalten des Schützes K₃ mit dem Drehstromnetz verbunden. 1 s nach dem Aufschalten des Motor M₂ an das Drehstromnetz wird auch der dritte Drehstrommotor M₃ nach dem oben beschriebenen Muster über die SSEC-Steuerung hochgefahren und anschließend an das Netz gekoppelt. Damit laufen nun alle drei Drehstrommotoren M₁, M₂ und M₃ mit ihrer vollen Nennleistung am Drehstromnetz.

Wird nun durch Änderung der Außentemperatur eine Anpassung der Kühlleistung und damit der Ventilatorleistung erforderlich, z. B. durch Hinzufügen des 1,6-fachen der Nennleistung eines Drehstrommotores aus der gesamten Gruppe, so wird der Drehstrommotor M₄ nach dem oben beschriebenen Verfahren über das Schütz K₈ bzw. K₇ hinzugeschaltet. Darüber hinaus wird der Drehstrommotor M₅ nach Schalten des Schützes K₁₀ derart mittels der SSEC-Steuerung angefahren, dass er mit dem 0,6-fachen der Nenndrehzahl läuft. Die Gesamtleistung der Ventilatoren beträgt an dem gewählten Arbeitspunkt nun das 4,6-fache der Nennleistung eines einzelnen Ventilators.

Falls die Regelung vorgibt, die Leistung auf das 2,4-fache der Nennleistung eines einzelnen Ventilators herunter zu fahren, so wird zuerst der Motor M₅, an dem die SSEC-Steuerung hängt, durch Trennen des Schützes K₁₀ heruntergefahren. Anschließend werden die Motoren M₄ und M₃ in dieser Reihenfolge durch Trennen der Schütze K₇ und K₅ vom Netz genommen. Dann wird der den beiden noch laufenden Motoren am nächsten stehende Motor M₃ durch Schalten des Schützes K₆ per SSEC-Steuerung wiederum auf den gewünschten Arbeitspunkt von 0,4-facher Nenndrehzahl hochgefahren.

Mit dem beschriebenen Verfahren lässt sich auf einfache und kostengünstige Weise eine Regelung für eine Mehrzahl von Drehstrommotoren realisieren, die 1) energie- und kostensparend arbeitet, weil nur ein Steuergerät mit einer Leistungselektronik verwendet wird, 2) geräuschmindernd ist, weil jeweils nur ein Motor stufenweise hochgefahren wird, ohne ruckartig einzuschalten, und 3) auf einfache Weise bei bestehenden Anlagen nachgerüstet werden kann.

## Patentansprüche

1. Verfahren zum Regeln der Betriebsleistung einer Mehrzahl von Drehstromasynchron-Kurzschlussläufermotoren, die in einem Drehstromnetz parallel geschaltet betrieben werden, mit folgenden Schritten:
a) Anfahren eines ersten Drehstrommotores mittels eines vorbestimmten Steuerverfahrens, bis die Nenndrehzahl erreicht ist,
b) Abkoppeln des ersten Drehstrommotores von dem vorbestimmten Steuerverfahren und Aufschalten des ersten Drehstrommotores an das Drehstromnetz, so dass der erste Drehstrommotor mit Nennleistung am Drehstromnetz läuft, und
c) nach einer vorbestimmten Zeitdauer Anfahren eines zweiten Drehstrommotores mittels des vorbestimmten Steuerverfahrens auf einen definierten Arbeitspunkt oder bis zur Nenndrehzahl,
wobei für das vorbestimmte Steuerverfahren ein einziges Steuergerät verwendet wird, derart, dass für das Anfahren jeweils dasselbe Steuergerät nacheinander für sämtliche Drehstrommotoren zum Einsatz kommt.

2. Verfahren nach Anspruch 1, **dadurch gekennzeichnet, dass** das Verfahren zusätzlich die Schritte
d) Abkoppeln des zweiten Drehstrommotores von dem vorbestimmten Steuerverfahren, sobald die Nenndrehzahl erreicht ist, und Aufschalten des zweiten Drehstrommotores an das Drehstromnetz, so dass der zweite Drehstrommotor mit Nennleistung am Drehstromnetz läuft, und
e) Wiederholen der Schritte c) und d) für weitere Drehstrommotoren
aufweist, bis die gewünschte Betriebsleistung erreicht ist.

3. Verfahren nach Anspruch 2, **dadurch gekennzeichnet, dass** Schritt d) für den letzten hochgefahrenen Drehstrommotor optional ist

4. Verfahren nach einem der vorhergehenden Ansprüche, **dadurch gekennzeichnet, dass** das Verfahren zusätzlich den Schritt des Abschaltens eines oder mehrerer mit Nennleistung laufender Drehstrommotoren umfasst.

5. Verfahren nach einem der vorhergehenden Ansprüche, **dadurch gekennzeichnet, dass** das vorbestimmte Steuerverfahren eine Drehzahlregelung mittels Phasenanschnittsteuerung, Frequenzumformung, Stufensteuerung oder dergleichen verwendet.

6. Verfahren nach einem der vorhergehenden Ansprüche, **dadurch gekennzeichnet, dass** bei jeder Durchführung des Verfahrens ein anderer Drehstrommotor aus der Mehrzahl von Drehstrommotoren als erster Drehstrommotor verwendet wird.

7. Steuergerät zur Durchführung des Verfahrens nach einem der vorhergehenden Ansprüche.
